# EUROPÄISCHE PATENTSCHRIFT

(11) **EP 1 832 377 B1**
(45) Veröffentlichungstag und Bekanntmachung des Hinweises auf die Patenterteilung: **25.08.2010**
(21) Anmeldenummer: 07103742.8
(22) Anmeldetag: 08.03.2007
(51) Int. Cl.: B23K 26/06, B23K 26/073

(54) **Vorrichtung und Verfahren zum Schweißen eines Werkstückes**
Device and method for welding a workpiece
Dispositif et procédé pour souder une pièce

(30) Priorität: 08.03.2006 DE 102006011064
(43) Veröffentlichungstag der Anmeldung: 12.09.2007
(73) Patentinhaber: Technische Universität München, 80333 München (DE)
(72) Erfinder: Trautmann, Andreas, 82178 Puchheim (DE)
(74) Vertreter: Barth, Stephan Manuel

(56) Entgegenhaltungen:
- EP-A1- 1 350 590
- WO-A-99/06173
- US-A- 4 682 855

## Beschreibung

Die vorliegende Erfindung betrifft eine Vorrichtung und ein Verfahren zum Schweißen eines Werkstücks, insbesondere eines Werkstücks aus einem Leichtmetall.

Die DE 196 19 339 A1und die WO 99/06173 beschreiben eine Laserstrahl-Bearbeitungsvorrichtung, bei der ein erster Laserstrahl und ein zweiter Laserstrahl nach Überlagerung durch eine Kollimationsvorrichtung auf die Oberfläche eines Werkstücks fokussiert werden. Die WO 99/06173 zeigt die Merkmale des Oberbegriffs der Ansprüche 1 und 13.

Aus der DE 102 31 784 A1 ist ein Verfahren zum Hochgeschwindigkeits-Fügen metallischer Bauteile mittels kombiniertem Wärmeleitungs- und Tießschweißen bekannt.

Die DE 199 63 010 A1 offenbart ein Verfahren und eine Vorrichtung zur Laserbearbeitung von Werkstücken, wobei ein kardanisch aufgehängter Spiegel zur Strahlablenkung verwendet wird.

Die DD 229 332 A1 offenbart ein Verfahren zum Fügen von Werkstücken geringer Wärme- und Temperaturleitfähigkeit, wobei ein Schweißzusatzwerkstoff auf der Oberfläche eines Werkstücks innerhalb eines Fokus eines Laserstrahls aufgebracht wird.

Werkstoffe aus Stählen lassen sich heutzutage mittels Lichtstrahlen aus Lasern effizient und zuverlässig schweißen. Entsprechend effiziente und zuverlässige Schweißverfahren mittels Laser werden auch für Leichtbauwerkstoffe aus Aluminium oder Magnesium angestrebt. An der Oberfläche von Leichtbauwerkstoffen bildet sich sehr leicht eine haftende Oxydschicht. Die Bildung wird zusätzlich durch die hohen Temperaturen beim Schweißen begünstigt. Dies kann zu einer Ausbildung einer Oxydschicht in einer Schweißnaht zwischen zwei miteinander zu verbindenden Werkstücken führen. Diese Bereiche werden auch als "Kissing bond" bezeichnet und weisen eine nur geringe Festigkeit auf.

Beim Schweißen mit Lasern werden typischerweise Lichtstrahlen verwendet, die eine sehr hohe Leistungsdichte in einem kleinen Strahldurchmesser aufweisen. Die Leistungsdichte ist ausreichend, um den Werkstoff zu verdampfen. Hierdurch kann sich eine Kapillare in dem Werkstück bilden, die mit verdampften Material des Werkstücks gefüllt ist. Dies wird als der sogenannter Tiefschweißeffekt (Key hole) bezeichnet. In der Kapillare ergeben sich Phasenübergänge vom festen in den flüssigen und den gasförmigen Aggregatzustand. Das gasförmige Material verdrängt das flüssige Material und kann nachteiligerweise dazu führen, dass Anteile des flüssigen Materials aus der Kapillare spritzen. Dies kann zu Unregelmäßigkeiten im Schweißprozess führen, die Anbindungsfehler, Nahtfehler und die besagten Schweißspritzer zur Folge haben. Dadurch wird die Nahtqualität herabgesetzt. Die Nahtqualität ist aber für die statische und dynamische Festigkeit des Werkstoffs entscheidend. Die Spritzer können zusätzlich zu einer Beeinträchtigung der Oberflächenqualität führen.

Die DE 19751195 C1 beschreibt ein weiteres Verfahren zum Schweißen mittels Lasern, bei der zwei Lichtstrahlen mit kreisförmigen Profil eingesetzt werden, die einen unterschiedlichen Durchmesser aufweisen. Der Lichtstrahl mit dem größeren Durchmesser bestrahlt die Oberfläche des Werkstücks und schmilzt die Oberfläche auf. Der Lichtstrahl mit dem geringeren Durchmesser weist einen Fokus auf, der innerhalb des ersten Lichtstrahls liegt.

Durch die Fokussierung des Lichtstrahls mit dem geringeren Durchmesser in das Werkstück hinein ergibt sich eine verringerte Effizienz. Dies ist darin begründet, dass dieser Lichtstrahl zunächst mit einem größeren als seinem minimalen Durchmesser auf die Oberfläche des Materials auftrifft und somit mit einer geringern als maximal möglichen Leistungsdichte das Material an der Oberfläche oder nahe der Oberfläche verdampfen muss, bevor er bis in die Tiefe reichen kann.

Eine Aufgabe der vorliegenden Erfindung ist eine Vorrichtung und ein Verfahren bereitzustellen, mit dem Werkstoffe effizient und zuverlässig geschweißt werden können.

Diese Aufgabe wird durch die Vorrichtung mit den Merkmalen des Patentanspruchs 1 und das Verfahren mit den Merkmalen des Patentanspruchs 13 gelöst.

Eine Idee der vorliegenden Erfindung besteht darin, dass in einem ersten größeren Bereich das Material an der Oberfläche eines Werkstücks geschmolzen wird. Das Aufschmelzen erfolgt nur sehr oberflächennah. Dies reicht allerdings aus, um die Oxydschicht an der Oberfläche zu beseitigen. Das Oxyd weist eine etwas größere Dichte als das geschmolzene darunterliegende Material. Somit liegt nun an der Oberfläche flüssiges geschmolzenes Material vor. Vorteilhafterweise weist das geschmolzene Material einen höheren Absorbtionskoeffizienten für den geschmolzenen Lichtstrahl auf. Hierdurch kann nun der zweite Lichtstrahl effizient das flüssige Material bis über den Siedepunkt aufheizen und somit verdampfen. Die Effizienz wird dadurch erhöht, dass der zweite Lichtstrahl ebenfalls auf die Oberfläche fokussiert oder nur geringfügig versetzt zu der Oberfläche fokussiert ist. Unter geringfügig ist zu verstehen, dass der Fokus des zweiten Lichtstrahls maximal in einer Tiefe liegt, bis zu der der erste Lichtstrahl das Material aufschmelzt.

Das Aufheizen des flüssigen Materials über den Siedepunkt führt zu einer Konvektion des flüssigen Materials. Diese Konvektionsströmung ist ausreichend, flüssiges Material auch in die Senke zu transportieren, die durch den zweiten Lichtstrahl in das Werkstück eingebracht wird. Dies führt dazu, dass der zweite Lichtstrahl im Wesentlichen nicht mit dem festen Material in Berührung kommt. Hierdurch werden vorteilhafterweise Phasenübergänge direkt von fest nach gasförmig vermieden. Letztere sind vorwiegend ursächlich für Schweißspritzer. Ferner verhindert die Konvektion die Ausbildung eines Siedeverzugs und daraus resultierender Schweißspritzer.

Beim Schweißen werden der erste und der zweite Lichtstrahl synchron zueinander entlang einer vorgegebenen Bahn bewegt, um eine Schweißnaht auszubilden. In die von dem zweiten Lichtstrahl gebildete Vertiefung fließt dabei immer flüssiges Material nach, welches durch den ersten Lichtstrahl aufgeschmolzen ist. Hierdurch wird die Schweißnaht geglättet und eine verbesserte Oberflächenqualität durch eine Reduktion der Oberflächenrauhigkeit erreicht. Dafür ist es notwendig, dass der Fokus des ersten Lichtstrahls innerhalb des Fokus des zweiten Lichtstrahls liegt.

Der erste Lichtstrahl soll eine Intensität aufweisen, die ausreichend ist, das Material zu schmelzen, aber nicht ausreichend ist, das Material zu verdampfen. Eine Einstellung der Intensität erfolgt durch eine Leistungsregelungseinrichtung. Diese Leistungsregelungseinrichtung kann auch in der Lichtquelle integriert sein, zum Beispiel in Form einer Leistungsstabilisierung, deren Sollwert vorab eingestellt ist. Die Leistung des zweiten Lichtstrahls wird ebenfalls durch die Leistungsregelungseinrichtung eingestellt.

Die Überlagerung des ersten und zweiten Lichtstrahls erfolgt durch eine Überlagerungseinrichtung, zum Beispiel in Form eines dichroiden oder eines halbdurchlässigen Spiegels. Die Kollimationseinrichtung kann einstückig vorgesehen sein, und die beiden Lichtstrahlen werden überlagert durch sie hindurchgeführt oder sie kann aus zwei getrennten Einrichtungen bestehen, die die beiden Lichtstrahlen auf die Oberfläche fokussieren.

In den Unteransprüchen sind Ausgestaltungen und Weiterbildungen der erfindungsgemäßen Vorrichtung und des erfindungsgemäßen Verfahrens angegeben.

Erfindungsgemäß ist eine Strahlformungseinheit zum Aufprägen eines rechteckförmigen Profils auf den ersten Lichtstrahl vorgesehen. Obenstehend ist bereits ausgeführt, dass die Konvektion des flüssigen und aufgeschmolzenen Materials wesentlich für die Herstellung einer guten Schweißverbindung ist. Hierbei zeigt sich, dass eine besonders gleichmäßige Konvektion erreicht werden kann, wenn der durch die erste Lichtquelle aufgeschmolzene Bereich eine rechteckige Form aufweist.

Während des Schweißens werden die beiden Lichtstrahlen entlang der vorgesehenen Bahn zum Bilden der Schweißnaht geführt. Der rechteckige Bereich weist zwei Ränder auf, die parallel zu der Bewegungsrichtung sind. Entlang dieser Ränder kann das flüssige Material ungehindert strömen. Insbesondere wird es durch die Ränder nicht in die Mitte gedrängt oder zu dem Bereich gedrängt, welcher durch die zweite Lichtquelle erhitzt wird. Dies steht im Gegensatz zu kreisförmigen oder ellipsenförmigen Bereichen, die sich in Bewegungsrichtung verjüngen.

Eine Ausgestaltung der erfindungsgemäßen Vorrichtung sieht vor, die erste und/oder die zweite Lichtquelle mit einem Lichtleiter zu versehen. Dies ist insbesondere für die Integration der Vorrichtung in einem Robotersystem von Vorteil, da sich die Lichtleiter, insbesondere Glasfaserleiter, einfach durch einen Roboter führen lassen.

In einer weiteren Ausgestaltung ist der Spektralbereich des ersten Lichtstrahls und der Spektralbereich des zweiten Lichtstrahls voneinander abgegrenzt. Hierdurch kann eine Überlagerungseinrichtung mittels eines dichroiden Spiegels erfolgen. Hierdurch können Überlagerungen mit sehr geringen Verlusten der Leistung des ersten und des zweiten Lichtstrahls erreicht werden.

Gemäß einer Ausgestaltung kann die erste und die zweite Lichtquelle zwei getrennte Lasereinheiten oder eine gemeinsame Lasereinheit aufweisen. Vorzugsweise wird eine gemeinsame Lasereinheit verwendet, um einen geringeren Platzbedarf und geringere Anschaffungskosten zu realisieren. Der erste und zweite Lichtstrahl kann durch einen Strahlteiler mit einem geeigneten Teilungsverhältnis realisiert werden. Eine Leistungsregelungseinrichtung kann hierzu in beiden Teilästen nach dem Strahlteiler integriert werden oder als eine Regelung für die gemeinsame Lasereinheit und eine zweiten in einem der beiden Äste.

Gemäß einer Ausgestaltung ist eine Ablenkeinrichtung zum Bewegen der Foki des ersten und des zweiten Lichtstrahls entlang einer vorgesehenen Bahn auf einer Oberfläche des Werkstücks vorgesehen. Die Ablenkeinrichtung lenkt die beiden Foki synchron zueinander ab. Vorzugsweise ist die Ablenkeinrichtung der Kollimationseinrichtung nachgeschaltet, sodass sie die beiden überlagerten Strahlen ablenkt. Ferner kann die Ablenkeinrichtung einen kardanisch aufgehängten Spiegel aufweisen. Die Ablenkeinrichtung und die Überlagerungseinrichtung können auch in einer Einrichtung realisiert werden, indem der kardanisch aufgehängte Spiegel ein dichroider oder ein teilweise durchlässiger Spiegel ist.

In einer Weiterbildung ist eine Schweißzusatzwerkstoff-Spendeeinrichtung zum Aufbringen eines Schweißzusatzwerkstoffes auf der Oberfläche des Werkstoffes innerhalb des Fokus des ersten Lichtstrahls vorgesehen. Vorzugsweise ist die Schweißzusatzwerkstoff-Spendeeinrichtung derart angeordnet, dass der Schweißzusatzwerkstoff an einem Punkt der Oberfläche aufbringbar ist, der in Richtung einer vorgesehenen Bahn des Fokus des zweiten Lichtstrahls, vor dem Fokus des zweiten Lichtstrahls liegt. Der erste Lichtstrahl schmilzt auf diese Weise gleich den Schweißzusatzwerkstoff auf. Ferner kann durch die Anordnung der Schweißzusatzspendeeinrichtung Material direkt in die Vertiefung strömen, die der zweite Lichtstrahl in dem Werkstoff ausbildet.

In einer Ausgestaltung ist eine Absorptionseinrichtung neben der Überlagerungseinrichtung und/oder der Ablenkeinrichtung zum Absorbieren der Strahlanteile des ersten und zweiten Lichtstrahls vorgesehen, welche nicht in Richtung des Werkstücks gerichtet sind. Die Absorptionseinrichtung wird vorteilhafterweise aus Kupfer gebildet, und deren Oberfläche ist zumindest im Bereich der einfallenden Strahlanteile mit Titanoxyd beschichtet. Die Überlagerungseinrichtung und/oder die Ablenkeinrichtung weisen in der Regel keine hundertprozentige Effizienz auf. Die Strahlanteile des ersten und zweiten Lichtstrahles, die nicht wie gewünscht überlagert bzw. abgelenkt werden, müssen zum Schutz der Umgebung, der Vorrichtung oder Personen abgeschirmt werden. Hierzu ist die Absorptionseinrichtung vorgesehen. Die vorteilhafte Absorptionseinrichtung aus Kupfer mit aufgebrachtem Titanoxyd weist eine geringe Wärmeabstrahlung auf und verhindert somit ein Aufheizen der Absorptionseinrichtung, der Überlagerungseinrichtung und sonstiger Optiken und Mechaniken. Diese Absorptionseinrichtung weist insbesondere bessere Eigenschaften als ein geschwärzter oder eloxierter Metallkörper auf.

Nachfolgend wird die Erfindung anhand von bevorzugten Ausführungsbeispielen und beigefügten Figuren erläutert.

In den Figuren zeigen:
Fig.1 ein Blockdiagramm einer Ausführungsform der vorliegenden Erfindung
Fig. 2 eine Aufsicht auf ein Werkstück während einem Schweißen nach einer Ausführungsform des erfindungsgemäßen Verfahrens
Fig. 3 eine Seitenansicht zur der Fig. 2
Fig. 4 eine Aufsicht auf ein Werkstück während einem Schweißen nach einer weiteren Ausführungsform des erfindungsgemäßen Verfahrens
Fig. 5 eine Seitenansicht zur der Fig. 3

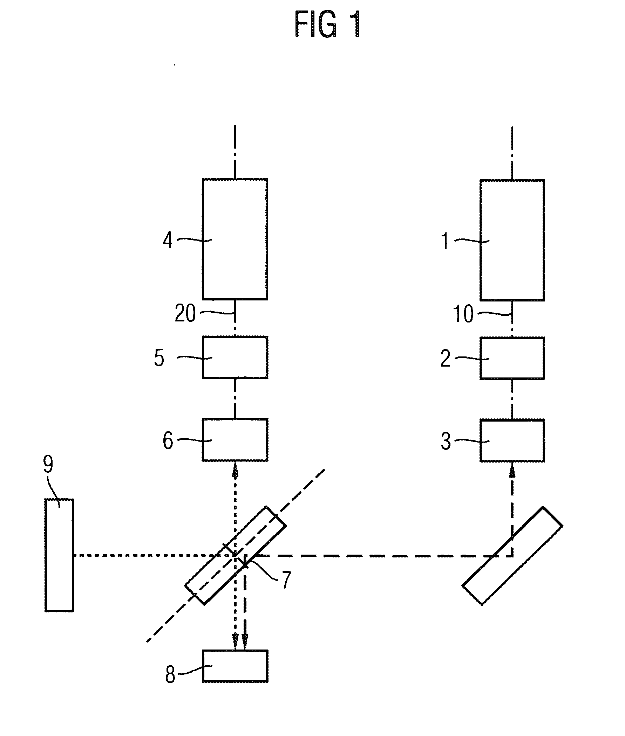

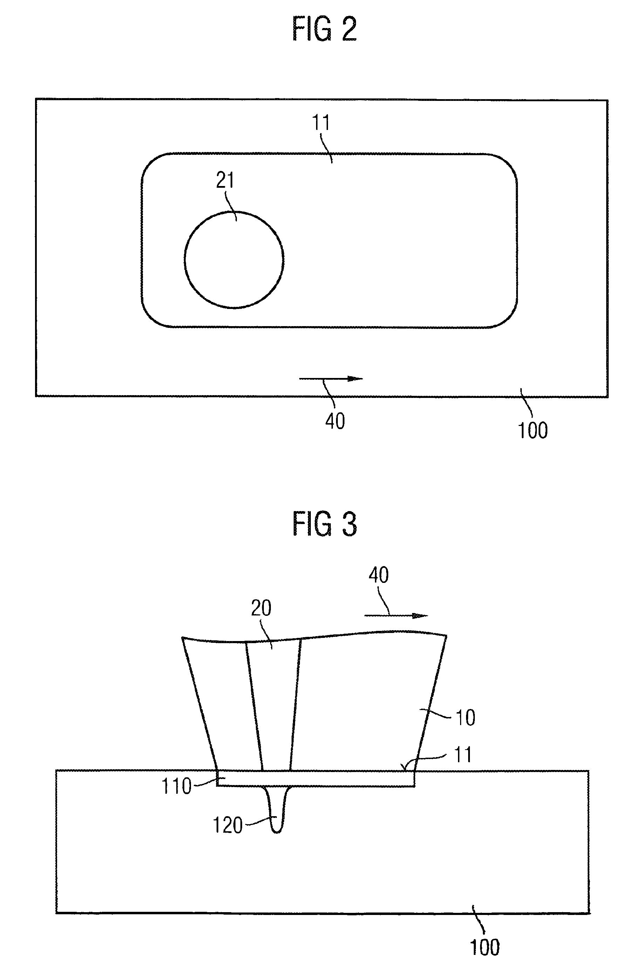

In Figur 1 ist ein Blockdiagramm eines Ausführungsbeispiels für die erfindungsgemäße Vorrichtung gezeigt. Eine erste starke Lichtquelle 1, zum Beispiel ein Hochleistungsdiodenlaser, Nd:YAGlaser, Kohlenstoffdioxidlaser, Faserlaser emittiert einen ersten Lichtstrahl. Dieser wird durch eine Intensitätsregelung 2 und eine Strahlformungseinrichtung 3 geführt. Die Strahlformungseinrichtung 3 prägt dem ersten Laserlichtstahl vorzugsweise ein rechteckförmiges Profil auf. Der geformte Laserlichtstrahl wird über einen halbdurchlässigen oder dichroiden Spiegel 7 auf eine Fokussierungseinrichtung 8 gelenkt. Fokussierungseinrichtung 8 bildet den Fokus des ersten Laserlichtstrahls auf eine Oberfläche eines zu bearbeitenden Werkstücks ab. In Figur 2 ist dies Werkstück 100 in einer Aufsicht dargestellt. Der Fokus 11 des ersten Lichtstrahls 10 weist eine rechteckige Form auf. Die rechteckige Form weist in der Regel abgerundete Ecken und möglicherweise auch leicht nach außen gewölbte Seiten auf. In Figur 3 ist der erste Lichtstrahl 10 und sein Fokus in einer Seitenansicht dargestellt.

Die Intensitätsregelung 2 stellt die Leistungsdichte in dem ersten Lichtstrahl 10 derart ein, dass das Werkstück 100 an der Oberfläche aufschmilzt. Für ein Werkstück 100 aus Aluminium sind hierfür Ausgangsleistungen von 3 kW für eine rechteckige Fläche von etwa 3mm x 1mm ausreichend. Die Leistungsdichte in dem ersten Laserlichtstrahl 10 ist jedoch nicht ausreichend, um das Material des Werkstücks zu verdampfen. Der Bereich 110 in dem das Material aufgeschmolzen wird entspricht im Wesentlichen dem Fokus 11 des ersten Lichtstrahls 10. Die Tiefe des aufgeschmolzenen Bereichs 110 ist gering, typischerweise wenige mm.

In dem in Figur 2 dargestellten Fokus 11 ist das Längenverhältnis der längeren Seite zu der kürzeren Seite des Rechtecks in etwa 2:1. Dies ist jedoch nicht als einschränkend auszulegen, quadratische Abmessungen bis zu deutlich langgestreckten Rechtecken können ebenso verwendet werden.

In Figur 1 ist eine zweite starke Lichtquelle 4 schematisch dargestellt, die vorzugsweise ebenfalls eine Laserlichtquelle ist. Der von ihr generierte zweite Lichtstrahl 20 wird ebenfalls einer Intensitätsregelungseinrichtung 5 zugeführt. Optional kann der zweite Lichtstrahl 20 durch eine Strahlformungseinrichtung 6 geformt werden. Besonders bevorzugt sind in diesem Fall gaußförmige oder kreisförmige Profile. Der zweite Lichtstrahl 20 wird ebenfalls auf den dichroiden Spiegel 7 oder eine anders geartete Überlagerungseinrichtung gerichtet. Durch eine geeignete Justage überlagern sich in der Überlagerungseinrichtung 7 der erste und der zweite Lichtstrahl 10, 20. Der zweite Laserlichtstrahl 20 wird dadurch ebenfalls durch die Kollimationseinrichtung 8 auf die Oberfläche des Werkstücks 100 fokussiert. Der Fokus 21 des zweiten Laserlichtstrahls 20 ist rund und weist vorzugsweise ein gaußförmiges Intensitätsprofil auf.

Durch die Überlagerung des ersten Lichtstrahls 10 und des zweiten Lichtstrahls 20 wird sichergestellt, dass der Fokus des zweiten Lichtstrahls 20 innerhalb des Fokus 11 des ersten Lichtstrahls liegt.

Die Ausgangsleistung der zweiten Lichtquelle 4 liegt in etwa auch im Bereich von 3 kW. Durch die geringere Fokusfläche, mit einem Durchmesser von etwa 0,5 mm, ergibt sich eine wesentlich erhöhte Leistungsdichte in dem Fokus 21. Diese ist ausreichend, das Material des Werkstücks 100 zu verdampfen.

Durch stetiges Verdampfen bildet der zweite Laserlichtstrahl 20 eine Vertiefung 120 in dem Werkstück 100. In diese Vertiefung strömt flüssiges Material aus dem aufgeschmolzenen Bereich 110 nach. Auf diese Weise verdampft der zweite Laserlichtstrahl im Wesentlichen nur bereits vorher verflüssigtes oder bereits durch das flüssige Material erhitztes festes Material. Die Temperaturgradienten in dem Werkstoff bleiben auf diese Weise innerhalb moderater Grenzen. Insbesondere kann eine Abblation oder eine Sublimation von festem Material in die gasförmige Phase vermieden werden. Dieses kann leicht zu Spritzern mit flüssigem Material und zu Unregelmäßigkeiten in der Bildung der Vertiefung 120 führen.

Während des Schweißens werden die beiden Lichtstrahlen 10, 20 und damit deren Foki 11, 21 mittels einer Ablenkeinrichtung über die Oberfläche des Werkstücks 100 geführt. Die Ablenkeinrichtung kann durch den dichroiden Spiegel gebildet werden, der vorzugsweise kardanisch aufgehängt ist. Die Bewegungsrichtung der Foki 11, 21 ist durch den Pfeil 40 in den Figuren 2 und 3 beispielhaft angegeben.

Während der Vorwärtsbewegung des Grabens 120 kann flüssiges Material in den Graben nachfließen und in diesem langsam erstarren. Dies führt vorteilhafterweise zu einem relativ langsamen Abkühlen und damit zu geringen thermischen Spannungen in dem Material und einer Vermeidung von Einschlüssen. Da sich auch der erste Laserlichtstrahl vorwärtsbewegt, kühlt der hintere Teil des Oberflächenbereichs 110 ab. Hierdurch wird ebenfalls eine gleichmäßige Abkühlung erreicht, ohne dass große Temperaturgradienten auftreten. Insgesamt ergibt sich vorteilhafterweise eine besonders glatte Schweißnaht.

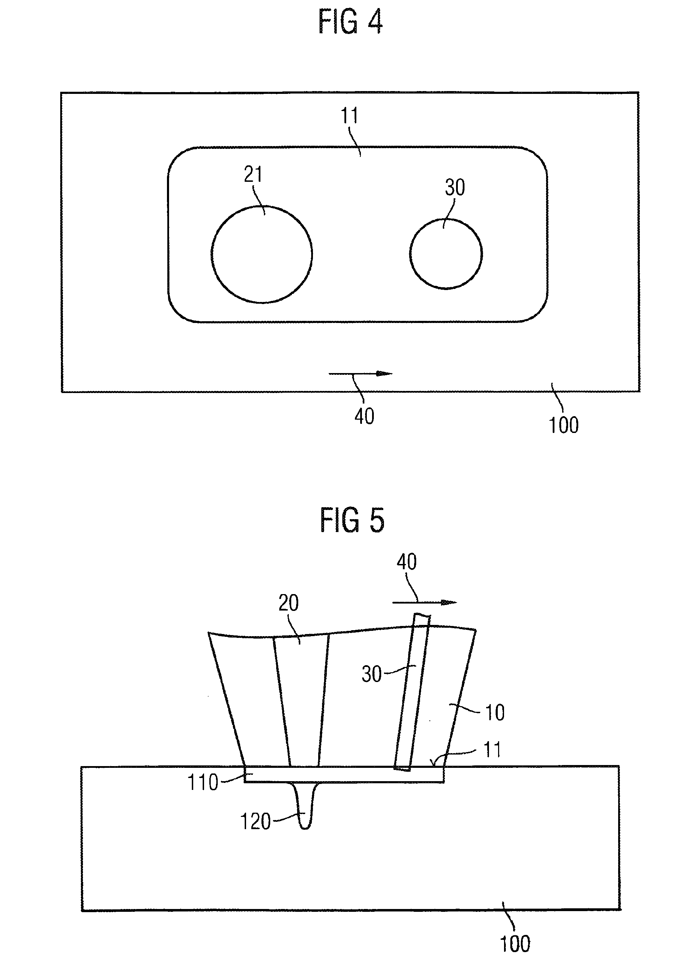

Es erweist sich als vorteilhaft beim Schweißen einen Schweißzusatzwerkstoff 30 zuzuführen. Dieser kann in Form eines dicken Drahtes zugeführt werden. Typischerweise besteht der Schweißzusatzwerkstoff aus einem ähnlichen Werkstoffmaterial wie das Werkstück 100 selbst. In einer Ausgestaltung wird ein solcher Draht 30 durch eine Spendeeinrichtung (nicht dargestellt) bei dem erfindungsgemäßen Schweißvorgang bereitgestellt. Dabei taucht der Draht 30 in den Schmelzbereich 110 des ersten Lichtstrahls 10 ein. Hierdurch wird der Draht durch den ersten Lichtstrahl aufgeschmolzen. Das geschmolzene Material des Schmelzzusatzwerkstoffes wird durch die Konvektion in die Vertiefung 120 transportiert. Vorzugsweise wird der Draht in Bewegungsrichtung 40 vor dem Graben, das heißt, vor dem zweiten Laserlichtstrahl 20 angeordnet, wie dies aus den Figuren 4 und 5 ersichtlich ist.

Die Spendeeinrichtung wird vorzugsweise zusammen mit dem ersten und zweiten Lichtstrahl synchron geführt. Dies kann unter anderem dadurch erreicht werden, dass der erste und zweite Lichtstrahl in einen Lichtleiter eingekoppelt werden und dieser Lichtleiter zusammen mit der Spendeeinrichtung in einer Einheit integriert von demselben Roboter geführt werden. Ferner kann in der Einheit auch die Überlagerungseinrichtung 7 integriert werden.

Vorzugsweise lassen sich eine Vielzahl der vorher beschriebenen Einrichtungen in einer einzigen Komponente integrieren. Anstelle von zwei Lasersystemen kann auch ein einziges Lasersystem verwendet werden und der erste und zweite Lichtstrahl durch einen Strahlteiler generiert werden.

In der Überlagerungseinrichtung 7 werden Teile des ersten Lichtstrahls 10 nicht in Richtung der Fokussierungseinrichtung 8 umgelenkt, sondern werden von dem dichroiden Spiegel einfach transmittiert. Um eine Beschädigung anderer Komponenten und eine Verletzung von Personen auszuschließen, wird eine Absorptionseinrichtung 9 in diesen Strahlengang des transmittierten Lichtstrahls gesetzt. Obwohl die Transmittivität des dichroiden Spiegels nur im Bereich von wenigen Prozent und teilweise darunter liegt, ist die Intensität des Strahlanteils aufgrund der hohen absoluten Leistung der Lichtquelle 1 erheblich. Deshalb führt der Teilstrahl zu einer Erwärmung der Absorptionseinrichtung 9. Aufgrund des vorzugsweise engen kompakten Aufbaus gibt die Absorptionseinrichtung 9 einen Anteil ihrer Wärme wieder an die Umgebung und damit an die optischen Elemente, wie zum Beispiel die Überlagerungseinrichtung 7 ab. Dies führt zu einer Verschlechterung und Dejustage der optischen Einrichtungen. Vorteilhafterweise wurde erkannt, dass eine Beschichtung eines Kupferblockes mit Titanoxyd zu einem guten Kompromiss einer Absorption des Teilstrahls und einer geringen Wärmeabgabe führt. Optional kann der Kupferblock zusätzlich mittels Wasser gekühlt werden.

Die Absorptionseinrichtung 9, die Überlagerungseinrichtung 7, die Kollimationseinrichtung 8 können in einer Einheit integriert werden, um damit zweckmäßigerweise an einem Roboterarm befestigt zu werden.

Vorzugsweise erfolgt das Schweißen in Schutzgasatmosphäre, aus Edelgasen wie Helium oder Argon, oder einem Gemisch davon, und/oder Stickstoff.

Das erfindungsgemäße Verfahren weist eine hohe Spaltüberbrückbarkeit auf, das heißt, es kann Bleche miteinander verschweißen, die bis zu 1,2 mm voneinander beabstandet sind.

## Patentansprüche

1. Vorrichtung zum Schweißen eines Werkstückes (100), insbesondere zum Schweißen eines Werkstücks (100) aus einem Leichtmetall, mit:
- einer ersten Lichtquelle (1) zum Bereitstellen eines ersten Lichtstrahls (10),
- einer zweiten Lichtquelle (4) zum Bereitstellen eines zweiten Lichtstrahls (20),
- einer Strahlformungseinheit (3)
- einer Kollimationseinrichtung (8) zum Fokussieren des ersten Lichtstrahls (10) auf eine Oberfläche des Werkstücks (100) und zum Fokussieren des zweiten Lichtstrahls (20) auf die Oberfläche oder bis maximal in eine Tiefe unter die Oberfläche des Werkstücks (100), bis zu der der erste Lichtstrahl (10) das Material des Werkstücks (100) aufschmilzt;
- einer Überlagerungseinrichtung (7) zum Überlagern des ersten Lichtstrahls (10) und des zweiten Lichtstrahls (20) derart, dass in der Ebene der Oberfläche des Werkstücks (100) der zweite Lichtstrahl (20) von dem ersten Lichtstrahl (10) umschlossen ist, und
- einer Leistungsregelungseinrichtung (2, 5) zum Einstellen der Leistung des ersten Lichtstrahls derart (10), dass der fokussierte erste Lichtstrahl (10) das Material des Werkstückes (100) aufschmilzt, und zum Einstellen der Leistung des zweiten Lichtstrahls (20) derart, dass der fokussierte zweite Lichtstrahl (20) das Material des Werkstücks (100) zumindest teilweise verdampft, **dadurch gekennzeichnet, dass** die Strahlformungseinheit (3) zum Aufprägen eines rechteckförmigen Profils auf den ersten Lichtstrahl (10); dient.

2. Vorrichtung nach Anspruch 1,
**dadurch gekennzeichnet, dass**
die erste Lichtquelle und/oder die zweite Lichtquelle einen Lichtleiter aufweisen.

3. Vorrichtung nach einem der vorhergehenden Ansprüche, **dadurch gekennzeichnet, dass**
der Spektralbereich des ersten Lichtstrahls (10) und der Spektralbereich des zweiten Lichtstrahl (20) voneinander abgegrenzt sind.

4. Vorrichtung nach einem der vorhergehenden Ansprüche, **dadurch gekennzeichnet, dass**
die Leistung des ersten Lichtstrahls (10) ausreichend für ein Wärmeleitungsschweißen ist.

5. Vorrichtung nach einem der vorhergehenden Ansprüche, **dadurch gekennzeichnet, dass**
die Leistung des zweiten Lichtstrahls (20) ausreichend für ein Tiefenschweißen ist.

6. Vorrichtung nach einem der vorhergehenden Ansprüche, **dadurch gekennzeichnet, dass**
die erste Lichtquelle (1) und die zweite Lichtquelle (4) zwei getrennte Lasereinheiten oder eine gemeinsame Lasereinheit aufweisen.

7. Vorrichtung nach einem der vorhergehenden Ansprüche, **dadurch gekennzeichnet, dass**
eine Ablenkeinrichtung (7) vorgesehen ist, die eingerichtet ist, die Foki des ersten und des zweiten Laserstrahls (10, 20) entlang einer vorgesehenen Bahn auf bzw. auf und unter der Oberfläche des Werkstücks (100) bewegen.

8. Vorrichtung nach Anspruch 7,
**dadurch gekennzeichnet, dass**
die Ablenkreinrichtung (7) einen kardanisch aufgehängten Spiegel aufweist.

9. Vorrichtung nach einem der vorhergehenden Ansprüche
**dadurch gekennzeichnet,**
**dass** eine Schweißzusatz-Spendeeinrichtung vorgesehen ist, die eingerichtet ist, einen Schweißzusatzwerkstoff (30) auf die Oberfläche des Werkstücks (100 innerhalb des Fokus (11) des ersten Lichtstrahles (10) aufzubringen.

10. Vorrichtung nach Anspruch 9,
**dadurch gekennzeichnet, dass**
die Schweißzusatz-Spendeeinrichtung derart angeordnet ist, dass der Schweißzusatzwerkstoff an einem Punkt der Oberfläche des Werkstücks (100) aufbringbar ist, der in Richtung (40) einer vorgesehenen Bahn des Fokus des zweiten Lichtstrahls(20) vor dem Fokus des zweiten Lichtstrahls (20) liegt.

11. Vorrichtung nach einem der vorhergehenden Ansprüche,
**dadurch gekennzeichnet,**
**dass** eine Absorptionseinrichtung (9) neben der Überlagerungseinrichtung (7) zum Absorbieren der Strahlanteile des ersten und zweiten Lichtstrahls (10, 20), welche nicht in Richtung des Werkstücks (100) gerichtet sind, vorgesehen ist.

12. Vorrichtung nach Anspruch 11,
**dadurch gekennzeichnet, dass**
die Absorptionseinrichtung (9) aus Kupfer gebildet ist und deren Oberfläche zumindest im Bereich der einfallenden Strahlanteile mit Titanoxid beschichtet ist.

13. Verfahren zum Schweißen eines Werkstückes (100), insbesondere zum Schweißen eines Werkstücks (100) aus einem Leichtmetall, mit den folgenden Schritten:
- Bereitstellen eines ersten Lichtstrahls (10),
- Bereitstellen eines zweiten Lichtstrahls (20),
- Fokussieren des ersten Lichtstrahls (10) auf eine Oberfläche des Werkstücks (100) und Fokussieren des zweiten Lichtstrahls (20) auf die Oberfläche oder bis maximal in eine Tiefe unter die Oberfläche des Werkstücks (100), bis zu der der erste Lichtstrahl (10) das Material des Werkstücks (100) aufschmilzt,
- Überlagern des ersten Lichtstrahl (10) und des zweiten Lichtstrahl (20) derart, dass in der Ebene der Oberfläche des Werkstücks (100) der zweite Lichtstrahl (20) von dem ersten Lichtstrahl (10) umschlossen ist,
- Einstellen der Leistung des ersten Lichtstrahls (10) derart, dass der fokussierte erste Lichtstrahl (10) das Material des Werkstückes (100) schmilzt, und
- Einstellen der Leistung des zweiten Lichtstrahls (20) derart, dass der fokussierte zweite Lichtstrahl (20) das Material des Werkstücks (100) zumindest teilweise verdampft, **gekennzeichnet durch** Aufprägen eines rechteckförmigen Profils auf den ersten Lichtstrahl (10).

## Claims

1. Device for welding a workpiece (100), in particular for welding a workpiece (100) made from a light metal, having:
- a first light source (1) for providing a first light beam (10),
- a second light source (4) for providing a second light beam (20),
- a beam shaping unit (3),
- a collimation device (8) for focusing the first light beam (10) onto a surface of the workpiece (100) and for focusing the second light beam (20) onto the surface or down to at most a depth below the surface of the workpiece (100) down to which the first light beam (10) melts the material of the workpiece (100),
- a superimposing device (7) for superimposing the first light beam (10) and the second light beam (20) in such a way that the second light beam (20) is surrounded by the first light beam (10) in the plane of the surface of the workpiece (100), and
- a power control device (2, 5) for setting the power of the first light beam (10) in such a way that the focused first light beam (10) melts the material of the workpiece (100), and for setting the power of the second light beam (20) in such a way that the focused second light beam (20) at least partially vaporizes the material of the workpiece (100), **characterized in that** the beam shaping unit (3) serves to impart a rectangular profile to the first light beam (10).

2. Device according to Claim 1, **characterized in that** the first light source and/or the second light source have/has a light guide.

3. Device according to one of the preceding claims, **characterized in that** the spectral region of the first light beam (10) and the spectral region of the second light beam (20) are delimited from one another.

4. Device according to one of the preceding claims, **characterized in that** the power of the first light beam (10) is sufficient for heat conduction welding.

5. Device according to one of the preceding claims, **characterized in that** the power of the second light beam (20) is sufficient for deep welding.

6. Device according to one of the preceding claims, **characterized in that** the first light source (1) and the second light source (4) have two separate laser units or one common laser unit.

7. Device according to one of the preceding claims, **characterized in that** a deflecting device (7) is provided which is set up to move the foci of the first and the second laser beam (10, 20) along a prescribed track on or on and under the surface of the workpiece (100).

8. Device according to Claim 7, **characterized in that** the deflecting device (7) has a cardanically suspended mirror.

9. Device according to one of the preceding claims, **characterized in that** a welding additive dispenser is provided which is set up to apply a welding additive material (30) to the surface of the workpiece (100) within the focus (11) of the first light beam (10).

10. Device according to Claim 9, **characterized in that** the welding additive dispenser is arranged in such a way that the welding additive material can be applied at a point of the surface of the workpiece (100) which lies upstream of the focus of the second light beam (20) in the direction (40) of a prescribed track of the focus of the second light beam (20).

11. Device according to one of the preceding claims, **characterized in that** provided next to the superimposition device (7) is an absorption device (9) for absorbing the beam portions of the first and second light beams (10, 20) which are not aligned in the direction of the workpiece (100).

12. Device according to Claim 11, **characterized in that** the absorption device (9) is formed from copper and its surface is coated with titanium oxide at least in the region of the incident beam portions.

13. Method for welding a workpiece (100), in particular for welding a workpiece (100) made from a light metal, having the following steps:
- providing a first light beam (10),
- providing a second light beam (20),
- focusing the first light beam (10) onto a surface of the workpiece (100), and focusing the second light beam (20) onto the surface or down to at most a depth below the surface of the workpiece (100) down to which the first light beam (10) melts the material of the workpiece (100),
- superimposing the first light beam (10) and the second light beam (20) in such a way that the second light beam (20) is surrounded by the first light beam (10) in the plane of the surface of the workpiece (100),
- setting the power of the first light beam (10) in such a way that the focused first light beam (10) melts the material of the workpiece (100), and
- setting the power of the second light beam (20) in such a way that the focused second light beam (20) at least partially vaporizes the material of the workpiece (100), **characterized by** imparting a rectangular profile to the first light beam (10).

## Revendications

1. Dispositif pour souder une pièce (100), notamment pour souder une pièce (100) en métal léger, avec :
- une première source lumineuse (1) pour fournir un premier rayon lumineux (10),
- une seconde source lumineuse (4) pour fournir un second rayon lumineux (20),
- une unité de mise en forme de rayon (3),
- un dispositif de collimation (8) pour focaliser le premier rayon lumineux (10) sur une surface de la pièce (100) et pour focaliser le second rayon lumineux (20) sur la surface ou sous la surface de la pièce (100) au maximum à une profondeur jusqu'à laquelle le premier rayon lumineux (10) fait fondre le matériau de la pièce (100),
- un dispositif de superposition (7) pour superposer le premier rayon lumineux (10) et le second rayon lumineux (20) de telle sorte que, dans le plan de la surface de la pièce (100), le second rayon lumineux (20) est entouré par le premier rayon lumineux (10), et
- un dispositif de réglage de puissance (2, 5) pour régler la puissance du premier rayon lumineux (10) de telle sorte que le premier rayon lumineux focalisé (10) fait fondre le matériau de la pièce (100) et pour régler la puissance du second rayon lumineux (20) de telle sorte que le second rayon lumineux focalisé (20) fait au moins partiellement s'évaporer le matériau de la pièce (100),
**caractérisé en ce que** l'unité de mise en forme de rayon (3) sert à imposer un profil rectangulaire au premier rayon lumineux (10).

2. Dispositif selon la revendication 1, **caractérisé en ce que** la première source lumineuse
et/ou la seconde source lumineuse comportent un guide de lumière.

3. Dispositif selon l'une des revendications précédentes, **caractérisé en ce que** le domaine spectral du premier rayon lumineux (10) et le domaine spectral du second rayon lumineux (20) sont séparés l'un de l'autre.

4. Dispositif selon l'une des revendications précédentes, **caractérisé en ce que** la puissance du premier rayon lumineux (10) est suffisante pour un soudage par conduction thermique.

5. Dispositif selon l'une des revendications précédentes, **caractérisé en ce que** la puissance du second rayon lumineux (20) est suffisante pour un soudage profond.

6. Dispositif selon l'une des revendications précédentes, **caractérisé en ce que** la première source lumineuse (1) et la seconde source lumineuse (4) comportent deux unités lasers séparées ou une unité laser commune.

7. Dispositif selon l'une des revendications précédentes, **caractérisé en ce qu'**il est prévu un dispositif de déviation (7) qui est installé de telle sorte que les points focaux du premier et du second rayon lumineux (10, 20) se déplacent le long d'une trajectoire prévue sur, respectivement sur et sous, la surface de la pièce (100).

8. Dispositif selon la revendication 7, **caractérisé en ce que** le dispositif de déviation (7) comporte un miroir suspendu à la cardan.

9. Dispositif selon l'une des revendications précédentes, **caractérisé en ce qu'**il est prévu un dispositif de distribution de matériau d'apport de soudage qui est installé pour appliquer un matériau d'apport (30) sur la surface de la pièce (100) à l'intérieur du point focal (11) du premier rayon lumineux (10).

10. Dispositif selon la revendication 9, **caractérisé en ce que** le dispositif de distribution de matériau d'apport de soudage est agencé de telle sorte que le matériau d'apport peut être appliqué en un point de la surface de la pièce (100) qui se trouve sur la direction (40) d'une trajectoire prévue du point focal du second rayon lumineux (20) devant le point focal du second rayon lumineux (20).

11. Dispositif selon l'une des revendications précédentes, **caractérisé en ce qu'**il est prévu un dispositif d'absorption (9) à côté du dispositif de superposition (7) pour absorber les composantes du premier et du second rayon (10, 20) qui ne sont pas dirigées en direction de la pièce (100).

12. Dispositif selon la revendication 11, **caractérisé en ce que** le dispositif d'absorption (9) est en cuivre et sa surface est revêtue d'oxyde de titane au moins dans la zone des composantes de rayon incidentes.

13. Procédé pour souder une pièce (100), notamment pour souder une pièce (100) en métal léger, comprenant les étapes suivantes :
- fourniture d'un premier rayon lumineux (10),
- fourniture d'un second rayon lumineux (20),
- focalisation du premier rayon lumineux (10) sur une surface de la pièce (100) et focalisation du second rayon lumineux (20) sur la surface ou sous la surface de la pièce (100) au maximum à une profondeur jusqu'à laquelle le premier rayon lumineux (10) fait fondre le matériau de la pièce (100),
- superposition du premier rayon lumineux (10) et du second rayon lumineux (20) de telle sorte que, dans le plan de la surface de la pièce (100), le second rayon lumineux (20) est entouré par le premier rayon lumineux (10),
- réglage de la puissance du premier rayon lumineux (10) de telle sorte que le premier rayon lumineux focalisé (10) fait fondre le matériau de la pièce (100), et
- réglage de la puissance du second rayon lumineux (20) de telle sorte que le second rayon lumineux focalisé (20) fait au moins partiellement s'évaporer le matériau de la pièce (100),
**caractérisé par le fait que** l'on impose un profil rectangulaire au premier rayon lumineux (10).
